Europäisches Patentamt

European Patent Office

Office européen des brevets

(19)

(11) **EP 1 724 613 A1**

(12) **EUROPEAN PATENT APPLICATION**
published in accordance with Art. 158(3) EPC

(43) Date of publication:
**22.11.2006 Bulletin 2006/47**

(21) Application number: **05720646.8**

(22) Date of filing: **07.03.2005**

(51) Int Cl.:
*G02B 1/11* (2006.01)    *C08J 7/04* (2006.01)

(86) International application number:
**PCT/JP2005/004375**

(87) International publication number:
**WO 2005/085913 (15.09.2005 Gazette 2005/37)**

(84) Designated Contracting States:
**DE GB NL**

(30) Priority: **09.03.2004 JP 2004065417**
**12.04.2004 JP 2004116732**

(71) Applicant: **Teijin Dupont Films Japan Limited**
**Tokyo 100-0011 (JP)**

(72) Inventor: **Asai, Masato,**
**c/o Teijin DuPont Films Japan Ltd**
**Anpachi-gun, Gifu 503-0123 (JP)**

(74) Representative: **Cockerton, Bruce Roger et al**
**Carpmaels & Ransford,**
**43-45 Bloomsbury Square**
**London WC1A 2RA (GB)**

(54) **ANTIREFLECTION FILM AND PROCESS FOR PRODUCING THE SAME**

(57)    A process for manufacturing an anti-reflection film, capable of adjusting the refractive index of a low-refractive index layer by using the same coating solution and forming a lower-refractive index layer. The process for manufacturing an anti-reflection film comprises applying a coating solution comprising fine particles coated with an organic polymer, a binder resin and an organic solvent having a boiling point of 100˚C or higher and miscible with water to one side of a film substrate and drying and curing it to form a low-refractive index layer having voids.

An anti-reflection film comprising a film substrate and a low-refractive index layer which is formed on one side of the film substrate, contains fine particles coated with an organic polymer and voids and has a refractive index of 1.10 to 1.29.

Fig. 1

**Description**

TECHNICAL FIELD

The present invention relates to an anti-reflection film and a manufacturing process thereof. More specifically, it relates to an anti-reflection film which is advantageously used as an anti-reflection film for the surface of a liquid crystal display (LCD), organic EL display or PDP, or as a light transmittance increasing filter to be put on an optical member in the inside of a device and to a manufacturing process thereof.

BACKGROUND ART

Heretofore, an anti-reflection functional coating film has been directly formed on a substrate for forming a display in most cases. Along with growing demand for flat displays, a film having an anti-reflection function is now put on the surface of a display or a front plate which is aimed to protect a display or has a filter function in most cases. Techniques for forming an anti-reflection film are divided into a wet coating technique in which a solution is applied to a film and dried repeatedly to form a laminate and a dry technique in which sputtering and deposition are carried out. The former has a problem that it is difficult to form multiple layers while reproducing a desired thickness accurately and the latter also has problems that the production costs are high due to the use of a vacuum and that productivity is low though it has high accuracy. Although it is advantageous that wet coating is carried out after the number of layers for obtaining an anti-reflection function by optical interference is reduced as much as possible to solve the above problems, a material for forming a layer having a sufficiently low refractive index, which allows for wet coating, is required to realize it.
As examples of this material, JP-A 10-182745 discloses a low-refractive index material prepared by polymerizing a monomer composition containing a fluorine-containing polyfunctional (meth)acrylic ester having a specific structure. JP-A 2001-262011 discloses that a fluorine-containing curable coating solution containing a fluorine-containing (meth) acrylic ester and colloidal silica modified by a silane coupling agent containing a (meth)acryloxy group and a fluorine-containing silane coupling agent in a specific ratio has high surface hardness and low reflectance and can be used for the surfaces of various substrates. JP-A 2003-202406 teaches that a cured coating layer of a coating composition comprising a silicone resin comprising a partial hydrolyzate and/or hydrolyzate of a hydrolyzable organosilane and hollow silica fine particles having an average particle diameter of 5 nm to 2 $\mu$m and voids in the inside of the outer shell as essential components can be used as an anti-reflection film.
Further, JP-A 2003-292805 discloses that a low-refractive index composition containing composite fine particles composed of an inorganic compound and an organic compound can be advantageously used as a low refractive index material when the organic compound has necessarily a molecular weight of 1,000 or more. However, the low-refractive index layer proposed by this publication has a refractive index of more than 1.3.
Although a large number of materials have been studied as low-refractive index materials up till now, there is still room for study in a material which can achieve a low refractive index to obtain a satisfactory anti-reflection effect with a single coat and a coating technique. A coating material for forming a low-refractive index layer having voids by wet coating is readily influenced by the type of a solvent in use, and the selection of a solvent is very important for a coating composition. However, there has been no report in connection with this.

DISCLOSURE OF THE INVENTION

It is an object of the present invention to solve the above problems in the prior arts to provide a process for manufacturing an anti-reflection film, capable of adjusting the refractive index without changing a material for forming a low-refractive index layer and an anti-reflection film which can achieve a lower refractive index than that of a conventional low-refractive index layer by adjusting its refractive index and has satisfactory anti-reflection performance with only one anti-reflection layer.
Other objects and advantages of the present invention will become apparent from the following description.
According to the present invention, firstly, the above objects and advantages of the present invention are attained by a process for manufacturing an anti-reflection film comprising a film substrate and a low-refractive index layer, comprising the steps of:

applying a coating solution comprising (a) coated fine particles composed of inorganic fine particles substantially made of an oxide of at least one element selected from the group consisting of Si, Al, Ti and Zr and an organic polymer for covering the surfaces of the inorganic fine particles, (b) a binder resin and (c) an organic solvent which has a boiling point of 100°C or higher and is miscible with water to at least one side of the film substrate; and drying the coating layer to form the low-refractive index layer having voids.

According to the repent invention, secondly, the above objects and advantages of the present invention are attained by an anti-reflection film comprising a film substrate and a low-refractive index layer which has voids and is formed on at least one side of the film substrate, wherein
the low-refractive index layer is made of (a) coated fine particles composed of inorganic fine particles substantially made of an oxide of at least one element selected from the group consisting of Si, Al, Ti and Zr and an organic polymer for covering the surfaces of the inorganic fine particles and (b) a binder resin and has a refractive index of 1.10 to 1.29.

BRIEF DESCRIPTION OF THE DRAWING

Fig. 1 is a schematic sectional view showing the layer constitution of the anti-reflection film of the present invention; and
Fig. 2 is a schematic sectional view showing the layer constitution of another anti-reflection film of the present invention.

BEST MODE FOR CARRYING OUT THE INVENTION

The present invention will be described in detail hereinunder.

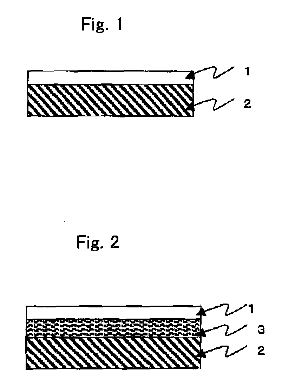

A description is first given of the layer constitution of the anti-reflection film of the present invention with reference to Fig. 1 and Fig. 2. Fig. 1 and Fig. 2 are schematic sectional views showing the layer constitutions of the anti-reflection films of the present invention. In Fig. 1 and Fig. 2, reference numeral 1 denotes a low-refractive index layer having voids, 2 a film substrate and 3 a hard coat layer. That is, the anti-reflection film of the present invention typically comprises a low-refractive index layer 1 having voids and a film substrate 2, or a low-refractive index layer 1 having voids, a hard coat layer 3 and a film substrate 2. It is easily understood from the following description that the present invention is not limited to the anti-reflection films shown in Fig. 1 and Fig. 2 and that the anti-reflection film of the present invention may comprise other functional layer in addition to these.

A description is subsequently given of a process for manufacturing the anti-reflection film of the present invention.

In the manufacturing process of the present invention, a coating solution having specific composition is first applied to at least one side of the film substrate.

This coating solution comprises (a) coated fine particles composed of inorganic fine particles substantially made of an oxide of at least one element selected from the group consisting of Si, Al, Ti and Zr and an organic polymer for covering the surfaces of the inorganic fine particles, (b) a binder resin and (c) an organic solvent having a boiling point of 100°C or higher.

Preferably, the above inorganic fine particles are substantially made of oxide of silicon.

Preferably, these inorganic fine particles are formed by the condensation of a partial hydrolyzate or a hydrolyzate of an alkoxide. In this case, the alkoxide means a substance having an alkoxy group (-OR group) bonded to the above element. R is a lower alkyl group, preferably methyl group, ethyl group, normal propyl group, isopropyl group, normal butyl group or isobutyl group. Preferably, the inorganic fine particles partially contain a hydroxyl group or an alkoxy group. The alkoxy group can improve affinity between the inorganic fine particles and the organic polymer which is used to modify the inorganic fine particles which will be described hereinafter or the binder resin, or can form a chemical bond between them. It also serves to improve the dispersibility of the inorganic fine particles in the organic solvent. An alkoxide has alkoxy groups corresponding to the valence of its center element. In the present invention, an alkoxide having 3 to 4 alkoxy groups is preferred.

The particle diameters of the above inorganic fine particles are preferably in the range of 5 to 200 nm.

Examples of the organic polymer for covering the surfaces of the inorganic fine particles include alkyl-based polymers, polymers having an urethane bond, polymers having an ester bond, polymers having an ether bond, and acrylic polymers. Out of these, acrylic polymers are preferred because they can easily adjust the refractive index and have excellent transparency. It is preferred from the viewpoint of dispersibility that the organic polymer should have at least one polysiloxane group and that at least one alkoxy group should be contained in the polysiloxane group. Examples of the alkoxy group are the same as described above. Preferably, the organic polymer contains fluorine.

In the present invention, the particle diameters of the above coated fine particles are preferably in the range of 5 to 200 nm. When the particle diameters of the fine particles are smaller than 5 nm, the surface energy of the particles becomes high, whereby the particles readily agglomerate in the coating solution and when the particle diameters are larger than 200 nm, the obtained low-refractive index layer does not have sufficiently high transparency.

Examples of the binder resin (b) which is not particularly limited include alkyl-based polymers, polymers having an urethane bond, polymers having an ester bond, polymers having an ether bond and acrylic polymers. Out of these, acrylic polymers are preferred because they have excellent transparency. The acrylic polymers which are not particularly limited are polymers polymerized from a monomer having an acryl group such as a monofunctional acrylate exemplified by methyl (meth)acrylate, ethyl (meth)acrylate, propyl (meth)acrylate, isopropyl (meth)acrylate, isobutyl (meth)acrylate, t-butyl (meth)acrylate and 3-hydroxyethyl (meth)acrylate, or a bifunctional acrylate exemplified by ethylene glycol di (meth)acrylate, propylene glycol di (meth) acrylate and butylene glycol di (meth) acrylate. Further, alkyl polymers or ether polymers having an acryl group at one terminal, and polymers having a reactive functional group such as hydroxyl group, carboxyl group, amino group, epoxy group, mercapto group or oxazoline group in the side chain of these polymers may also be used advantageously. In the present invention, the above polymers having an acryl group are referred to as "acrylic polymers". Out of these polymers, acrylic polymers containing a hydroxyl group in part of the structure are preferred in consideration of a reaction with a curing agent which will be described hereinafter.

Examples of the organic solvent (c) which is miscible with water and has a boiling point of 100˚C or higher include propylene glycol monomethyl ether (PGM, boiling point of 121˚C), propylene glycol monomethyl ether acetate (PGMA, boiling point of 146˚C), ethylene glycol monobutyl ether (EGB, boiling point of 171˚C), methyl isobutyl ketone (MIBK, boiling point of 115˚C), isobutyl acetate (IBAc, boiling point of 127˚C) and methyl-n-butyl ketone (MNBK, boiling point of 128˚C). Out of these, methyl isobutyl ketone, isobutyl acetate and methyl-n-butyl ketone are preferred, and methyl isobutyl ketone is particularly preferred. Even when the content of solid matter is changed, the refractive index of the obtained low-refractive index layer rarely changes with a solvent which has a boiling point lower than 100˚C and is immiscible with water like toluene or methyl ethyl ketone. When an organic solvent having a boiling point of 100˚C or higher, preferably 100 to 150˚C, more preferably 100 to 130˚C is used, even if the composition of solid matter constituting the low-refractive index layer is the same, the refractive index of the obtained low-refractive index layer can be adjusted by changing the composition of the coating solution such as the content of solid matter. When the boiling point of the solvent is lower than the lower limit, the low refractive index in the present invention cannot be obtained and when the boiling point is higher than the upper limit, the production line speed must be slowed down, or an oven must be set at a very high temperature disadvantageously. The above organic solvent must be miscible with water. The expression "miscible with water" means that the organic solvent has a polar group such as a hydroxyl group or carbonyl group. For example, the organic solvent can be mixed with 1 wt% or more, preferably 5 wt% or more of water uniformly. The advantage that the refractive index can be adjusted without changing the composition of solid matter constituting the low-refractive index layer is easily understood from the fact that various refractive indices can be obtained with single composition. That is, it cannot be said that the refractive index of the low-refractive index layer must be simply low, and there is an optimum refractive index which satisfies an amplitude condition according to the refractive index of the formed base film. Therefore, an advantage that having an optimum or a nearly optimum refractive index is obtained with single composition without preparing materials for forming a plurality of low-refractive index layers for a plurality of base films is extremely large. When the boiling point of the organic solvent is lower than 100˚C, no change in refractive index is seen maybe because uniform voids are not obtained due to the quick volatilization of the solvent at the time of drying after coating. When the solvent volatilizes after water in air is contained in the coating solution by a reduction in the temperature of the coating solution caused by vaporization heat at the time of drying after coating, gradients of solvent and water volatilization rates are formed, thereby making drying nonuniform and forming large voids in the low-refractive index layer with the result of the reduced transparency of the low-refractive index layer. Therefore, a high-boiling point solvent which is miscible with water and has a small difference in volatilization rate between solvent and water must be used.

As described above, it cannot be said that the refractive index of the low-refractive index layer must be simply low, and there is an optimum refractive index which satisfies the amplitude condition according to the refractive index of the film substrate in use. For example, when the film substrate is a polyethylene naphthalate film, high anti-reflection performance can be obtained with a low-refractive index layer having a refractive index proposed by JP-A 2003-292805, that is, 1.3 or more. However, in the case of a film substrate such as a polyethylene terephthalate or triacetyl cellulose film, high anti-reflection performance cannot be obtained with a low-refractive index layer having a refractive index of 1.3 or more. However, with the process of the present invention, the inventors of the present invention have succeeded in forming a low-refractive index layer having a refractive index of 1.10 to 1.29 on the surface of a film substrate.

In order to obtain such a low refractive index, for example, the content of solid matter in the coating solution is reduced, the amount of an organic solvent miscible with water and having a boiling point of 100˚C or higher is increased, or an organic solvent which readily remains in the coating layer at the time of drying after coating is selected. From this point of view, it is desired that an organic solvent miscible with water and having a boiling point of 100˚C or higher should be contained in the coating solution in an amount of preferably 70 wt% or more, more preferably 80 wt% or more, much more preferably 90 wt% or more, particularly preferably 95 wt% or more. When the amount of the organic solvent is smaller than the above lower limit, voids are hardly formed in the low-refractive index layer, or the low-refractive index layer may become clouded at the time of drying by a convection current formed by the volatilization of another solvent existent in the coating solution. The content of solid matter for forming the low-refractive index layer at the time of coating is preferably 0.5 to 10 wt%, more preferably 0.5 to 5 wt% because the refractive index can be easily adjusted. To further reduce the refractive index, the content of solid matter is much more preferably 0.5 to 2 wt%, particularly preferably 0.5 to 1.8 wt%. Outside the above range, it is difficult to make the obtained low-refractive index layer thick enough to have satisfactory reflection characteristics.

Although the film substrate in the present invention is not particularly limited, preferred examples of the material of the film substrate include (meth)acrylic resin, polystyrene, polyvinyl acetate, polyolefins such as polyethylene and polypropylene, polyvinyl chloride, polyvinylidene chloride, polyesters such as polyethylene terephthalate (PET) and polyethylene naphthalate (PEN), copolymers thereof, resins prepared by partially modifying these (co)polymers with a functional group such as amino group, epoxy group, hydroxyl group or carbonyl group, and triacetyl cellulose (TAG). Out of these film substrates, polyester (PET, PEN and copolymers thereof) films and triacetyl cellulose (TAC) film are particularly preferred from the viewpoint of mechanical properties and transparency. When the refractive index of the low-refractive index layer is 1.29 or less, a polyethylene terephthalate film and a triacetyl cellulose film are preferred. The thickness of the film substrate is not particularly limited but preferably 200 $\mu$m or less. When the thickness of the film substrate is larger than 200 $\mu$m, it is difficult to handle the obtained anti-reflection film at the time of putting it on a display because its stiffness is too high.

Preferably, the above coating solution used in the present invention further contains an alkoxy compound represented by the following formula:

$$(R^1O)_nMR^2_{m-n}$$

wherein $R^1$ and $R^2$ are each independently an alkyl group having 1 to 4 carbon atoms, M is Al, Si, Ti or Zr, m is a number equivalent to the valence of M, and n is an integer of 2 to m.

The above alkoxy compound has the function of fixing the coated fine particles in the low-refractive index layer.

Out of the compounds represented by the above formula, hydrolyzable substances are preferred, as exemplified by methyltriacetoxysilane, dimethyldiacetoxysilane, trimethylacetoxysilane, tetraacetoxysilane, tetramethoxysilane, tetraethoxysilane, tetraisopropoxysilane, tetraisobutoxysilane, methyltriethoxysilane, dimethyldiethoxysilane, trimethylethoxysilane and phenyltriethoxysilane. A catalyst may be contained so as to promote the hydrolytic condensation of the binder resin for forming the above low-refractive index layer and the organic polymer for covering the surfaces of the coated fine particles efficiently. The catalyst may be an acid catalyst or basic catalyst. Preferred examples of the acid catalyst include inorganic acids such as hydrochloric acid and nitric acid, and organic acids such as acetic acid, citric acid, propionic acid, oxalic acid and p-toluenesulfonic acid. Preferred examples of the basic catalyst include organic amine compounds such as ammonia, triethylamine and tripropylamine, and alkali metal compounds such as sodium methoxide, potassium methoxide, potassium ethoxide, sodium hydroxide and potassium hydroxide.

The aging time of the coating solution required for promoting satisfactory hydrolysis which depends on the pH of the coating solution and ambient temperature and humidity is preferably 1 hour or longer.

The coating solution in the present invention may contain a crosslinking agent for the binder resin (b). This crosslinking agent crosslinks and cures the binder resin (b) when the coating layer is dried.

Examples of the crosslinking agent include polyfunctional isocyanate compounds, melamine compounds and aminoplast resin. Out of them, polyfunctional isocyanate compounds are preferred because they are easy to handle. The polyfunctional isocyanate compounds include tolylene diisocyanate, xylylene diisocyanate, diphenylmethane diisocyanate, hexamethylene diisocyanate, biurets of 1,6-hexamethylene diisocyanate and trimers such as isocyanurate. Compounds having two or more residual isocyanate groups formed by a reaction between a polyfunctional isocyanate and a polyhydric alcohol and blocked polyfunctional isocyanate compounds blocked by an oxime or lactam may also be used.

As for the application of the above coating solution to the film substrate, the coating solution may be applied to the film substrate itself or a hard coat layer formed on a film as the film substrate. In either case, at least one side of the film substrate is coated. Therefore, in the case of the film substrate having a hard coat layer on one side, the coating solution may be applied to the hard coat layer or the opposite side to the hard coat layer. The hard coat layer is made of a silane, organic compound such as acryl, or composite compound thereof. It may be cured by heat or radiation. A radiation curable hard coat layer is preferred, and a UV curable hard coat layer is particularly preferred.

UV curable compositions used to form the hard coat layer include urethane-acrylate, epoxy-acrylate and polyester-acrylate UV curable compositions. Fine particles can be added to these hard coat layer forming materials to provide slipperiness and hardness. To form the hard coat layer, the composition is applied to at least one side of the film substrate and cured by heating or the illumination of radiation (for example, ultraviolet radiation).

The thickness of the hard coat layer is preferably 0.5 to 10 $\mu$m, more preferably 1 to 5 $\mu$m. When the thickness of the hard coat layer is smaller than the lower limit, satisfactory hard coat properties are not obtained and when the thickness is larger than the upper limit, blocking may occur.

In the present invention, any known coating technique can be employed to form the low-refractive index layer and the hard coat layer. Examples of the coating technique include lip direct coating, comma coating, slit reverse coating, die coating, gravure roll coating, blade coating, spray coating, air knife coating, dip coating and bar coating. When a thermosetting resin is used as the binder, a coating layer is formed by applying a coating solution containing the resin to the substrate and drying it by heating. The heating conditions include a temperature of 80 to 160°C and a time of 10 to 120 seconds, particularly preferably a temperature of 100 to 150°C and a time of 20 to 60 seconds. When an UV curable resin or EB curable resin is used as the binder, after pre-drying, the coating layer is generally exposed to ultraviolet radiation or electron beam.

For the application of the coating solution to the film substrate, as a pre-treatment for improving adhesion or coatability as required, the surface of the film is subjected to a physical surface treatment such as corona discharge treatment or plasma discharge treatment or to a chemical surface treatment for forming a coating adhesive layer by applying an organic resin or inorganic resin coating during or after film formation. When the coating adhesive layer is formed, it is recommended to choose the refractive index of its material and film thickness to satisfy the interference condition and amplitude condition with the low-refractive index layer formed on the coating adhesive layer.

The manufacturing process of the present invention is carried out by applying the above specific coating solution to the film substrate and drying the coating layer as described above. Thereby, the low-refractive index layer having voids is formed on the film substrate. The temperature and time for drying are the same as the drying conditions for forming a hard coat layer by using a thermosetting resin as the binder.

According to the present invention, there is provided an anti-reflection film comprising a film substrate and a low-refractive index layer having voids on at least one side of the film substrate, wherein the low-refractive index layer comprises (a) coated fine particles composed of inorganic fine particles substantially made of an oxide of at least one element selected from the group consisting of Si, Al, Ti and Zr and an organic polymer for covering the surfaces of the fine particles, and (b) a binder resin and has a refractive index of 1.10 to 1.29.

The low refractive index in the present invention can be realized by forming voids in the low-refractive index layer through the volatilization of the solvent when the low-refractive index layer is formed as described above. The average refractive index of the low-refractive index layer is determined by the percentage of voids of the layer. The percentage of voids in the present invention is 15 to 80 %, preferably 25 to 70 %, more preferably 35 to 65 %. When the percentage of voids is lower than the lower limit, a sufficiently low refractive index may not be obtained and when the percentage of voids is higher than the upper limit, satisfactory strength of low-refractive index layer may not be obtained.

The above low-refractive index layer in the present invention preferably contains a fluorine atom. Although the style of containing the fluorine atom is not particularly limited, it is preferably contained in the organic polymer for covering the surfaces of the inorganic fine particles. The organic polymer is preferably a polymer obtained by polymerizing a monomer component including a monomer having a fluorine atom. Examples of the monomer containing a fluorine atom include organic compounds having a perfluoroalkyl group, metal alkoxides containing a perfluoro group in part of the structure, and organic/inorganic composites having a perfluoroalkyl group in part of the structure. Examples of the perfluoroalkyl group include perfluoromethyl group, perfluoroethyl group, perfluoropropyl group, perfluorobutyl group, perfluorohexyl group, perfluorooctyl group, perfluorodecyl group, perfluorododecyl group and perfluorotetradecyl group. These monomers may be used alone or in combination of two or more. The group containing a fluorine atom may be contained in the organic polymer for the coated fine particles contained in the low-refractive index layer or in the organic binder for fixing the fine particles.

The above low-refractive index layer preferably contains a silicon atom. Although the style of containing silicon is not particularly limited, it is preferably contained in the organic polymer for covering the surfaces of the inorganic fine particles. Examples of this include silicon main chain polymers, silane coupling agents and silicon oxide polymers obtained by the condensation of a partial hydrolyzate or a hydrolyzate of a silane coupling agent.

A protective layer may be formed on the surface of the low-refractive index layer of the anti-reflection film of the present invention. The protective layer is made of a silicon compound obtained by the hydrolysis of an alkoxysilane compound such as methyltriacetoxysilane, dimethyldiacetoxysilane, trimethylacetoxysilane, tetraacetoxysilane, tetramethoxysilane, tetraethoxysilane, tetraisopropoxysilane, tetraisobutoxysilane, methyltriethoxysilane, dimethyldiethoxysilane, trimethylethoxysilane or phenyltriethoxysilane. The above alkoxysilane compounds are monofunctional to tetrafunctional depending on the number of alkoxy groups contained. The protective layer in the present invention is made of a trifunctional alkoxysilane and a tetrafunctional alkoxysilane. When the protective layer is made of only a trifunctional alkoxysilane, satisfactory layer strength is hardly provided to the protective layer and when the protective layer is made of only a tetrafunctional alkoxysilane, the resulting protective layer has poor flexibility and is easily cracked when it is dried though it shows satisfactory hardness. The weight ratio of the trifunctional alkoxysilane and the tetrafunctional alkoxysilane is preferably 3:100 to 30:100. When the protective layer is to be formed, it is preferred that silicone oil should be existent as the stainproof properties of the protective layer can be improved.

When the above protective layer is to be formed, a catalyst is generally used to fully promote hydrolysis or a condensation reaction after hydrolysis and to obtain a protective layer having satisfactory strength. Examples of the catalyst are the same as those enumerated for the catalyst used for the hydrolytic condensation of an alkoxy compound contained in the coating solution.

Examples of the solvent used when the protective layer is formed by coating include aromatic hydrocarbons such as benzene, toluene and xylene, esters such as ethyl acetate, butyl acetate and isobutyl acetate, ketones such as methyl ethyl ketone and methyl isobutyl ketone, ethers such as tetrahydrofuran, and alcohols such as methanol, ethanol, isopropyl alcohol, n-butanol and propylene glycol. Out of these, alcohols, ketones and ethers which are soluble in water are preferred.

The thickness of the above protective layer is preferably in the range of 1 to 15 nm. When the thickness of the protective layer is smaller than 1 nm, the effect of protecting the low-refractive index layer is not obtained fully and when the thickness is larger than 15 nm, optical interference occurs between the obtained layer and the low-refractive index layer, thereby greatly impairing anti-reflection characteristics. The thickness of the protective layer is more preferably 5 to 13 nm, particularly preferably 7 to 12 nm.

The anti-reflection film of the present invention put on the screen of a display, can be used to suppress the reflection of extraneous light on the screen of a display and improve the visibility of displayed contents. Examples of the display include liquid crystal displays, organic EL displays and plasma displays. The anti-reflection film of the present invention can also be used to increase the transmittance of light emitted from the inside of the display toward the screen when it is installed in the inside of the screen of the display, that is, put on a diffusion plate or prism sheet in the inside of the display, in addition to prevent the reflection of extraneous light. It can be particularly advantageously used in a liquid crystal display which requires power saving and the efficient emission of back light from the screen. Not limiting to these, it can also be put on a show window.

Examples

The following examples are provided to further illustrate the present invention. Evaluations in the examples were conducted as follows.

(1) reflectance

The absolute reflectance at an angle of 5˚ from the input direction of light having a wavelength of 550 nm is measured with an ultraviolet/visible light spectrophotometer (UV-3101PC of Shimadzu Corporation).

(2) thickness and refractive index of low-refractive index layer

The thickness and refractive index of the low-refractive index layer are obtained by measuring reflectance at a wavelength of 300 to 800 nm with a reflection spectral film thickness meter (FE-3000 (trade name) of Otsuka Denshi Co., Ltd.), citing an n-k Cauchy dispersion expression as a typical refractive index wavelength dispersion approximate expression and fitting the actual measurement value of the spectrum into the expression.

(3) refractive index of base film

The refractive index of the base film is measured by an Abbe's refractometer to average refractive indices in the film forming direction and directions perpendicular to the film forming direction and the thickness direction of the film, that is, the refractive index in the plane direction.

(4) thicknesses of film substrate and hard coat

The thicknesses of the film substrate and the hard coat are measured with an intermittent film thickness meter. When the film substrate and the hard coat layer are assembled together, the thickness of the assembly is measured and the thickness of the film substrate is measured by removing the hard coat layer, and the difference between them is calculated as the thickness of the hard coat layer. When the thickness of the film substrate before the hard coat layer is formed can be measured, the thickness is taken as the thickness of the film substrate and the value obtained by subtracting the thickness of the film substrate from the thickness after the formation of the hard coat layer is taken as the thickness of the hard coat layer.

(5) Percentage of voids

Various liquids having different refractive indices and a temperature of 25˚C are dropped on the low-refractive index layer of each of the films obtained by the methods described in Examples and Comparative Examples to measure the refractive index of the liquid at a liquid dropped site which looks the most transparent with an Abbe's refractometer (D ray of 589 nm) as the average refractive index $n_1$ of the particles and the binder component. When the refractive index of the obtained low-refractive index layer (including voids) is represented by n2, the percentage y (%) of voids can be represented by the following equation.

$$y = \{(n1 - n2)/(n1 - 1)\} \times 100$$

(6) scratch resistance

Steel wool #0000 is put on a ¥ 10 coin uniformly, a load of 50 g is placed on the wool, and the wool is rubbed 10 times to observe visually a scratch on the coin. The criteria are given below.

○: not badly scratched
◎: not scratched

Example 1

10 g of heptadecafluorodecylmethyl dimethoxysilane was gradually added to a solution obtained by dissolving 1 g of citric acid in 179 g of ion exchange water in a four-necked flask and stirred for 10 minutes after the total of the above substance was added. 100 g of an IPA dispersion sol of hollow silica particles having an average particle diameter of 60 nm (solid content of 20 %, manufactured by Catalysts & Chemicals Industries, Co., Ltd.) was mixed with the solution little by little under agitation, and stirred for 2 hours while the liquid temperature was maintained at 60˚C after the total amount of the above sol was injected to carry out the surface treatment of the particles. After the solvent was removed with an evaporator, the particles were dried at 120˚C for 2 hours in a nitrogen atmosphere to obtain about 20 g of surface treated hollow silica particles (S-1).

After 900 g of methanol, 300 g of ethanol, 550 of ion exchange water and 50 g of 2 wt% ammonia water were added to this flask and stirred for 1 hour, 162 g of tetramethoxysilane and 18 g of γ-methacryloxypropyltrimethoxysilane were further added and stirred for 6 hours until the clouded solution became transparent to carry out a hydrolytic reaction so as to prepare a coating precursor solution (A).

2 g of 2,2'-azobisisobutyronitrile was added to a solution prepared by mixing 30 g of t-butyl methacrylate, 70 g of 2-hydroxyethyl methacrylate and 100 g of butyl acrylate with 200 g of butyl acetate maintained at a temperature of 110˚C by a dropping funnel in a nitrogen atmosphere, and heated for 2 hours to carry out copolymerization so as to obtain a coating precursor solution (B).

Thereafter, a solution prepared by adding 320 g of ethyl acetate, 160 g of isopropyl alcohol and 0.1 g of silicone oil as a leveling agent to 180 g of the coating precursor solution (A) was stirred for 3 hours and 20 g of the coating precursor solution (B) was gradually mixed with the resulting solution by a dropping funnel and stirred for 3 hours after the total amount of the solution (B) was added so as to obtain a coating base (C) having a solid content of 20 %.

5 g of the coating base (C), 66.2 g of methyl isobutyl ketone (may be abbreviated as MIBK hereinafter) and 0.12 g of an isocyanate-based curing agent were mixed together and stirred for 10 minutes to prepare a coating solution (D) having a solid content of 1.5 %.

The coating solution (D) was applied to one side of a film substrate with a Meyer bar and dried and cured at 150˚C for 1 minute to form a low-refractive index layer. The gauge of the Meyer bar was selected to obtain a coating layer thickness of 110 nm. A polyethylene terephthalate (may be abbreviated as PET hereinafter) film (O3PF8W-100 of Teijin Du Pont Film Japan Limited) was used as the film substrate. The in-plane average refractive index of the PET film was 1.65. The characteristic properties of the obtained anti-reflection film are shown in Table 1.

Example 2

5 g of the coating base (C) prepared in the same manner as in Example 1, 49.9 g of MIBK and 0.12 g of an isocyanate-based curing agent were mixed together and stirred for 1.0 minutes to prepare a coating solution (E) having a solid content of 2.0 %. The coating solution (E) was applied with a Meyer bar and dried and cured at 150˚C for 1 minute to obtain a low-refractive index layer. The thickness of the coating layer was adjusted to 102 nm with the gauge of the Meyer bar so as to optimize as an anti-reflection film. A polyethylene naphthalate (may be abbreviated as PEN hereinafter) film (Q65-100 (trade name) of Teijin Du Pont Film Japan Limited) was used as the film substrate. The in-plane average refractive index of the PEN film in use was 1.74. The characteristic properties of the obtained anti-reflection film are shown in Table 1.

Example 3

5 g of a commercially available coating base (F) for forming a low-refractive index layer(PX2-LR7 (trade name) of Nippon Shokubai Co. , Ltd.), which comprises hollow silica particles modified by a fluorinated organic compound and a silane coupling agent as main components, 66.2 g of MIBK and 0.12 g of an isocyanate-based curing agent were mixed together and stirred for 10 minutes to prepare a coating solution (G) having a solid content of 1.5 %. The procedure of Example 1 was repeated except that this coating solution (G) was used in place of the coating solution (D). The characteristic properties of the obtained anti-reflection film are shown in Table 1.

Example 4

5 g of a commercially available coating base (F) for forming a low-refractive index layer (PX2-LR7 (trade name) of Nippon Shokubai Co., Ltd.), which comprises hollow silica particles modified by a fluorinated organic compound and a silane coupling agent as main components, 49.9 g of MIBK and 0.12 g of an isocyanate-based curing agent were mixed together and stirred for 10 minutes to prepare a coating solution (H) having a solid content of 2.0 %. The procedure of Example 2 was repeated except that this coating solution (H) was used in place of the coating solution (E) and the coating layer thickness was changed to 110 nm. The characteristic properties of the obtained anti-reflection film are shown in Table 1.

Example 5

A UV curable hard coating (HC-8 (trade name) of Dainichiseika Color & Chemicals Mfg. Co., Ltd.) was applied to a PET film (O3PF8W-100 (trade name) of Teijin Du Pont Films Japan Limited) with a Meyer bar, dried to remove the solvent and exposed to ultraviolet radiation with a low-pressure UV lamp to form a hard coat layer (HC) having a thickness of about 5 $\mu$m. The refractive index of the obtained hard coat was 1.53. The procedure of Example 3 was repeated except that this base film having a hard coat layer was used and a low-refractive index layer was formed on the hard coat layer. The characteristic properties of the obtained anti-reflection film are shown in Table 1.

Example 6

The procedure of Example 3 was repeated except that a triacetyl cellulose (TAC) film having a thickness of 80 $\mu$m was used as the base film. The in-plane average refractive index of the TAC film was 1.49. The characteristic properties of the obtained anti-reflection film are shown in Table 1.

Example 7

The procedure of Example 3 was repeated except that isobutyl acetate (may be abbreviated as IBAc hereinafter) was used in place of MIBK. The characteristic properties of the obtained anti-reflection film are shown in Table 1.

Example 8

The procedure of Example 7 was repeated except that the solid content was changed. The characteristic properties of the obtained anti-reflection film are shown in Table 1.

Example 9

The procedure of Example 3 was repeated except that methyl-n-butyl ketone (may be abbreviated as MBK hereinafter) was used in place of MIBK. The characteristic properties of the obtained anti-reflection film are shown in Table 1.

Example 10

The procedure of Example 9 was repeated except that the solid content was changed. The characteristic properties of the obtained anti-reflection film are shown in Table 1.

Comparative Example 1

The procedure of Example 1 was repeated except that toluene was used in place of MIBK. The characteristic properties of the obtained anti-reflection film are shown in Table 1.

Comparative Example 2

The procedure of Example 2 was repeated except that toluene was used in place of MIBK. The characteristic properties of the obtained anti-reflection film are shown in Table 1.

Comparative Example 3

The procedure of Example 1 was repeated except that methyl ethyl ketone (may be abbreviated as MEK hereinafter) was used in place of MIBK. The characteristic properties of the obtained anti-reflection film are shown in Table 1.

Comparative Example 4

The procedure of Example 2 was repeated except that MEK was used in place of MIBK. The characteristic properties of the obtained anti-reflection film are shown in Table 1.

Comparative Example 5

The procedure of Example 3 was repeated except that toluene was used in place of MIBK. The characteristic properties of the obtained anti-reflection film are shown in Table 1.

Comparative Example 6

The procedure of Example 4 was repeated except that toluene was used in place of MIBK. The characteristic properties of the obtained anti-reflection film are shown in Table 1.

Comparative Example 7

The procedure of Example 3 was repeated except that MEK was used in place of MIBK. The characteristic properties of the obtained anti-reflection film are shown in Table 1.

Comparative Example 8

The procedure of Example 4 was repeated except that MEK was used in place of MIBK. The characteristic properties of the obtained anti-reflection film are shown in Table 1.

Table 1

| | Coating base | Diluting solvent | Solid content (%) | Film substrate | Refractive index of low-refractive index layer |
|---|---|---|---|---|---|
| Example 1 | Base (C) | MIBK | 1.5 | PET | 1.27 |
| Example 2 | Base (C) | MIBK | 2 | PEN | 1.38 |
| Example 3 | Base (F) | MIBK | 1.5 | PET | 1.24 |
| Example 4 | Base (F) | MIBK | 2 | PEN | 1.35 |
| Example 5 | Base (F) | MIBK | 1.5 | PET/HC | 1.25 |
| Example 6 | Base (F) | MIBK | 1.5 | TAC | 1.26 |
| Example 7 | Base (F) | IBAc | 1.5 | PET | 1.25 |
| Example 8 | Base (F) | IBAc | 1.5 | PET | 1.34 |
| Example 9 | Base (F) | MBK | 1.5 | PET | 1.27 |
| Example 10 | Base (F) | MBK | 1.5 | PET | 1.36 |
| C.Example 1 | Base (C) | Toluene | 1.5 | PET | 1.44 |
| C.Example 2 | Base (C) | Toluene | 2 | PEN | 1.43 |
| C.Example 3 | Base (C) | MEK | 1.5 | PET | 1.41 |
| C.Example 4 | Base (C) | MEK | 2 | PEN | 1.39 |
| C.Example 5 | Base (F) | Toluene | 1.5 | PET | 1.42 |
| C.Example 6 | Base (F) | Toluene | 2 | PEN | 1.45 |
| C.Example 7 | Base (F) | MEK | 1.5 | PET | 1.43 |
| C.Example 8 | Base (F) | MEK | 2 | PEN | 1.41 |

C.Example : Comparative Example

Table 1-continued

| | Percentage of voids of low-refractive index layer (%) | thickness of low-refractive index layer/nm | Reflectance % | scratch resistance |
|---|---|---|---|---|
| Example 1 | 43 | 108 | 0.1 | ○ |
| Example 2 | 19 | 100 | 0.6 | ○ |
| Example 3 | 49 | 111 | 0.5 | ○ |
| Example 4 | 26 | 102 | 0.2 | ○ |
| Example 5 | 47 | 109 | 0.2 | ◎ |
| Example 6 | 45 | 112 | 0.5 | ○ |
| Example 7 | 47 | 100 | 0.2 | ○ |
| Example 8 | 28 | 100 | 0.2 | ○ |
| Example 9 | 43 | 105 | 0.1 | ○ |
| Example 10 | 23 | 105 | 0.1 | ○ |
| C.Example 1 | 6 | 96 | 2.4 | ○ |
| C.Example 2 | 9 | 98 | 1.4 | ○ |
| C.Example 3 | 13 | 95 | 1.6 | ○ |
| C.Example 4 | 17 | 96 | 1.3 | ○ |
| C.Example 5 | 11 | 97 | 2.4 | ○ |
| C.Example 6 | 4 | 99 | 1.4 | ○ |
| C.Example 7 | 9 | 98 | 1.5 | ○ |
| C.Example 8 | 13 | 96 | 1.1 | ○ |

C.Example : Comparative Example

It is understood that different refractive indices are obtained when each of the coating solutions in Examples is diluted with a specific solvent (MIBK) to adjust its solid content. Making use of this effect, high anti-reflection performance can be obtained by changing the refractive index of the low-refractive index layer formed in accordance with the refractive index of the base film or a layer formed under the low-refractive index layer.

According to the present invention, the refractive index of the low-refractive index layer obtained by coating can be adjusted by diluting the same coating solution with a specific solvent to adjust its solid content. Making use of this, a refractive index suitable for the refractive index of a film substrate can be obtained, thereby making it possible to provide an anti-reflection film having high performance. This means that it is possible to manufacture a high-performance anti-reflection film by a single coat of one type of coating material regardless of the refractive index of the base film and to improve extremely its productivity as compared with a conventional manufacturing process. In addition, a low-refractive index layer having a low refractive index which could not be attained by the prior art can be formed and is of great industrial value.

**Claims**

1.  A process for manufacturing an anti-reflection film comprising a film substrate and a low-refractive index layer, comprising the steps of:

applying a coating solution comprising (a) coated fine particles composed of inorganic fine particles substantially made of an oxide of at least one element selected from the group consisting of Si, Al, Ti and Zr and an organic polymer for covering the surfaces of the inorganic fine particles, (b) a binder resin and (c) an organic solvent which has a boiling point of 100°C or higher and is miscible with water to at least one side of the film substrate; and drying the coating layer to form the low-refractive index layer having voids.

2. The process according to claim 1, wherein the coating solution further contains an alkoxy compound represented by the following formula:

$$(R^1O)_nMR^2_{m-n}$$

wherein $R^1$ and $R^2$ are each independently an alkyl group having 1 to 4 carbon atoms, M is Al, Si, Ti or Zr, m is a number equivalent to the valence of M, and n is an integer of 2 to m,
and the organic solvent (c) is miscible with water.

3. The process according to claim 1, wherein the coating solution contains a crosslinking agent for the binder resin (b) to crosslink and cure the binder resin (b) when the coating layer is dried.

4. The process according to claim 1, wherein the organic solvent is a ketone-based organic solvent.

5. The process according to claim 1, wherein the low-refractive index layer contains a fluorine atom and a silicon atom.

6. The process according to claim 1, wherein the average particle diameter of the coated fine particles is 5 to 200 nm.

7. The process according to claim 1, wherein the organic polymer for covering the surfaces of the inorganic fine particles is at least one selected from the group consisting of alkyl-based polymers, polymers having a urethane bond, polymers having an ester bond, polymers having an ether bond and acrylic polymers.

8. The process according to claim 1, wherein the organic polymer for covering the surfaces of the inorganic fine particles has a polysiloxane group having at least one alkoxy group.

9. The process according to claim 1, wherein the content of the organic solvent in the coating solution is at least 70 % based on the weight of the coating solution, and the solid content of the coating solution is 0.5 to 10 %.

10. The process according to claim 1, wherein a hard coat layer is formed on one side of the film substrate, and the low-refractive index layer is formed on at least one side of the film substrate having the hard coat layer.

11. An anti-reflection film comprising a film substrate and a low-refractive index layer which has voids and is formed on at least one side of the film substrate, wherein
the low-refractive index layer is made of (a) coated fine particles composed of inorganic fine particles substantially made of an oxide of at least one element selected from the group consisting of Si, Al, Ti and Zr and an organic polymer for covering the surfaces of the inorganic fine particles and (b) a binder resin and has a refractive index of 1.10 to 1.29.

12. The anti-reflection film according to claim 11, wherein the low-refractive index layer contains a fluorine atom and a silicon atom.

13. The anti-reflection film according to claim 11, wherein the film substrate is made of at least one selected from the group consisting of polyethylene terephthalate and triacetyl cellulose.

14. The anti-reflection film according to claim 11, wherein the thickness of the low-refractive index layer is 10 to 150 nm.

15. The anti-reflection film according to claim 11, wherein a hard coat layer is formed between the film substrate and the low-refractive index layer or the side devoid of the low-refractive index layer of the film substrate.

16. Use of the anti-reflection film of claim 1 to be mounted on the screen of a display.

17. Use of the anti-reflection film of claim 16, wherein the display is a liquid crystal display.

18. Use of the anti-reflection film of claim 16, wherein the display is an organic EL display.

**19.** Use of the anti-reflection film of claim 16, wherein the display is a plasma display.

**20.** Use of the anti-reflection film of claim 1 which is arranged on the inner side of the screen of a display.

Fig. 1

Fig. 2

## INTERNATIONAL SEARCH REPORT

| | International application No. |
|---|---|
| | PCT/JP2005/004375 |

**A. CLASSIFICATION OF SUBJECT MATTER**
    Int.Cl$^7$  G02B1/11, C08J7/04

According to International Patent Classification (IPC) or to both national classification and IPC

**B. FIELDS SEARCHED**

Minimum documentation searched (classification system followed by classification symbols)
    Int.Cl$^7$  G02B1/11, C08J7/04

Documentation searched other than minimum documentation to the extent that such documents are included in the fields searched
    Jitsuyo Shinan Koho          1922-1996    Jitsuyo Shinan Toroku Koho      1996-2005
    Kokai Jitsuyo Shinan Koho    1971-2005    Toroku Jitsuyo Shinan Koho      1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2003-266606 A  (Sumitomo Chemical Co., Ltd.), 24 September, 2003 (24.09.03), Full text (Family: none) | 1-20 |
| Y | JP 2003-292805 A  (Nippon Shokubai Co., Ltd.), 15 October, 2003 (15.10.03), Full text (Family: none) | 1-20 |

☐  Further documents are listed in the continuation of Box C.          ☐  See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 07 June, 2005 (07.06.05) | 21 June, 2005 (21.06.05) |

| Name and mailing address of the ISA/ <br>    Japanese Patent Office | Authorized officer |
|---|---|
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10182745 A
- JP 2001262011 A
- JP 2003202406 A
- JP 2003292805 A